(19) Europäisches Patentamt
European Patent Office
Office européen des brevets

(11) Veröffentlichungsnummer: **0 009 082**
**B1**

(12) # EUROPÄISCHE PATENTSCHRIFT

(21) Anmeldenummer: **79102398.9**

(22) Anmeldetag: **12.07.79**

(51) Int. Cl.³: **C 08 J 9/22, C 08 L 25/04, C 08 K 5/19**

(54) **Verschäumbare kleinteilige Formmassen aus Styrolpolymerisaten.**

(30) Priorität: **13.09.78 DE 2839714**

(43) Veröffentlichungstag der Anmeldung:
**02.04.80 Patentblatt 80/7**

(45) Bekanntmachung des Hinweises auf die Patenterteilung:
**11.03.81 Patentblatt 81/10**

(84) Benannte Vertragsstaaten:
**BE FR GB IT NL SE**

(56) Entgegenhaltungen:
**US - A - 3 242 238**

(73) Patentinhaber: **CHEMISCHE WERKE HÜLS AG**
**Postfach 1320**
**D-4370 Marl 1 (DE)**

(72) Erfinder: **Rigler, Josef Karl, Dr.**
**Helgolandstrasse 16**
**D-4350 Recklinghausen (DE)**

(72) Erfinder: **Schäfer, Wolfgang, Dr.**
**Wiesenstrasse 71**
**D-4370 Marl (DE)**

(72) Erfinder: **Leithäuser, Horst, Dr.**
**Langehegge 151**
**D-4370 Marl (DE)**

(72) Erfinder: **Trukenbrod, Karl, Dr.**
**Leunaer Strasse 32**
**D-4370 Marl (DE)**

(72) Erfinder: **Bollmann, Werner**
**Albert-Schweitzer-Strasse 8**
**D-4358 Haltern 4 (DE)**

**EP 0 009 082 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verschäumbare kleinteilige Formmassen aus Styrolpolymerisaten

Verschäumbare kleinteilige Formmassen auf der Grundlage von Styrolpolymerisaten werden vorteilhaft durch Suspensionspolymerisation der Monomeren in Gegenwart von gasförmigen oder flüssigen Treibmitteln erhalten. Die treibmittelhaltigen Suspensionspolymerisate fallen in Perlform an, wobei der Durchmesser der Perlen zwischen 0,1 und 4 mm liegt. Zur Herstellung von Schaumstoffkörpern werden für die verschiedenen Anwendungsgebiete Perlen eines ganz bestimmten Größenbereichs benötigt. So verwendet man zur Herstellung dünnwandiger Formkörper Perlen von kleinem Durchmesser, für die Herstellung von Schaumstoffblöcken für Isolierungen solche mit größerem Durchmesser.

Perlen bestimmter Größe erhält man aus Produktionsansätzen durch Aussieben. Dies geschieht üblicherweise derart, daß die von der wäßrigen Phase abgetrennten Perlen gewaschen und getrocknet und dann auf bewegte Siebflächen aufgebracht werden. Dabei treten insofern Probleme auf, als durch die Bewegung und das Aneinanderreiben der Perlen auf der Siebfläche starke elektrostatische Aufladungen entstehen. Hierdurch wird die Absiebung erheblich erschwert, da kleine Perlen wie Trauben an den größeren haften und somit nicht mit der Siebfläche in Berührung kommen. Durch agglomerisierte Teilchen können die Siebmaschen verstopft werden, wodurch der Trenneffekt der Siebe vermindert wird.

Die verschäumbaren Formmassen werden in bekannter Weise durch Erhitzen in Wasser oder Wasserdampf zunächst vorgeschäumt und danach in Formen weiter aufgeschäumt und so zu Formkörpern versintert. Dabei wirkt sich ein erhöhter Feinanteil, d. h. der Anteil an Perlen mit einem Durchmesser $<0{,}1$ mm, in den einzelnen Fraktionen deshalb besonders störend aus, da die Dampfeinlaßdüsen der Verarbeitungsmaschinen durch diese feinen Perlen verstopft werden. Die vorgeschäumten Formmassen werden nach Trocknung und Zwischenlagerung den Ausschäumanlagen durch pneumatische Förderung zugeführt. Auch hier tritt wieder elektrostatische Aufladung auf — es bilden sich Agglomerate, so daß beim Fördern in den Leitungen Verstopfungen auftreten, die zu Störungen des Arbeitsablaufes führen.

Es hat daher in der Vergangenheit nicht an Versuchen gefehlt, die Aussiebung durch Zusatzstoffe (Siebhilfsmittel) zu verbessern:

Die französische Patentschrift 14 78 998 beschreibt den Zusatz einer quaternären Ammoniumverbindung. Diese Beschichtungen bewähren sich in der Praxis nicht, da die durch die unvermeidliche Zersetzungsreaktion der quaternären Ammoniumverbindungen entstehenden Amine zu einer Geruchsbelästigung bei der Verarbeitung und Verwendung führen. Außerdem sind quaternäre Ammoniumverbindungen physiologisch nicht unbedenklich und geben beispielsweise zu Ekzemen Anlaß.

Aus der deutschen Auslegeschrift 16 69 746 ist bekannt, feinteilige verschäumbare Formmassen, die ein Styrolpolymerisat und ein Treibmittel enthalten, mit einem Sulfoniumsalz zu beschichten, dessen Kation einen Kohlenwasserstoffrest mit 6 bis 24 Kohlenstoffatomen aufweist. Derartige Substanzen erniedrigen sehr stark die Grenzflächenspannung Styrol/Wasser, was sich insbesondere nachteilig auswirkt, wenn der abgesiebte Feinanteil im folgenden Polymerisationsansatz in Styrol gelöst wieder eingesetzt wird. Infolge der großen Oberfläche des Feinanteiles werden damit dem nachfolgenden Polymerisationsversuch nicht unbeträchtliche Mengen der grenzflächenaktiven Substanz zugeführt, und es kommt zu Störungen der Suspensionspolymerisation. Auch bei mehrmaligem Abwaschen ist die grenzflächenaktive Substanz nicht vom Feinanteil abzutrennen, so daß dieser bei weiteren Ansätzen nicht verwertet werden kann.

In der deutschen Auslegeschrift 26 25 389 ist ein Verfahren zum verbesserten Klassieren beschrieben, wobei man die nach der Polymerisation anfallenden blähfähigen Perlen mit einer wäßrigen Lösung eines hygroskopischen Metallsalzes behandelt. Der Nachteil dieser Methode liegt darin, daß die eingesetzten Metallsalze eine starke Korrosion an Metalloberflächen bewirken, so daß dieses Verfahren nicht über längere Zeiträume einsetzbar ist, ohne daß die Produktionsanlage Schaden erleidet.

Es wurde nun gefunden, daß feinteilige verschäumbare Formmassen auf der Grundlage von Styrolpolymerisaten diese Nachteil nicht aufweisen, wenn die Oberfläche der Teilchen der Formmasse mit Betainen der allgemeinen Formel

$$(R)_3\text{—}\overset{+}{N}\text{—}CH_2\text{—}COO^-$$

beschichtet ist, wobei R gleichartige oder verschiedenartige Kohlenwasserstoffreste mit 1 bis 4 Kohlenstoffatomen darstellt.

Unter Styrolpolymerisaten, die in den feinteiligen expandierbaren Formmassen enthalten sind, sind Polystyrol und Copolymerisate des Styrols zu verstehen, die mindestens 50% Styrol einpolymerisiert enthalten. Als Comonomere für Styrol können z.B. $\alpha$-Methylstyrol, kernhalogenierte Styrole, kernalkylierte Styrole, Acrylnitril, Maleinsäureanhydrid, Butadien, Divinylbenzol, Butandioldiacrylat verwendet werden.

Als Treibmittel enthalten die Formmassen flüssige oder gasförmige organische Verbindungen, die das Polymerisat nicht lösen und deren Siedepunkt unterhalb des Erweichungspunktes des Polymerisates liegt, z.B. aliphatische oder cycloaliphatische Kohlenwasserstoffe wie Propan, Butan, Pentan, Hexan, Heptan, Cyclohexan oder Halogenkohlenwasserstoffe wie Methylenchlorid, Dichlordifluormethan, Trifluorchlormethan.

Auch Mischungen der Treibmittel können in den Massen enthalten sein. Es ist vorteilhaft, 3 bis 10 Gewichtsprozent, bezogen auf das Styrolpolymerisat, an Treibmittel zu verwenden. Die Massen können außerdem noch andere Zusätze wie Flammschutzmittel, Gleitmittel oder Weichmacher enthalten.

Als Beschichtungsmittel im Sinne dieser Erfindung werden Betaine mit der allgemeinen Strukturformel

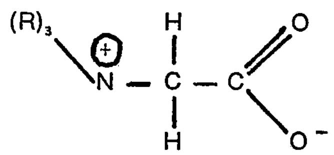

verwendet, wobei R gleichartige oder verschiedenartige Kohlenwasserstoffreste mit 1 bis 4 C—Atomen, insbesondere Alkylreste mit 1 bis 4 Kohlenstoffatomen, darstellt. Die Verbindung mit $R = (CH_3)_3$-(Glykokollbetain) wird besonders bevorzugt. Die Betaine werden in Mengen von 0,001 bis 1 Gewichtsprozent, bezogen auf die Formmassen, vorzugsweise in Mengen von 0,01 bis 0,1 Gewichtsprozent, eingesetzt.

Aus der US-PS 3 242 238 ist ein Verfahren zur Herstellung von Schaumstoff-Formkörpern bekannt, wobei treibmittelhaltige Teilchen mit einer wäßrigen Lösung eines oberflächenaktiven Netzmittels in einer vollständig gefüllten Form behandelt werden und nach einer weiteren Behandlung in einem Hochfrequenzfeld, zum Entfernen des Wassers, in üblicher Weise mit Hilfe der Dampfstoßmethode ausgeschäumt werden. Als geeignete oberflächenaktive Netzmittel, welche die Grenzflächenspannung zwischen wäßriger Phase und Polystyrol senken, werden auch langkettige Betaine genannt.

Die US-Patentschrift kann die Erfindung nicht nahelegen, da oberflächenaktive Beschichtungsmittel nach der Erfindung nicht eingesetzt werden können.

Betaine mit Kohlenwasserstoffresten von 1 bis 4 C—Atomen sind nämlich nicht grenzflächenaktiv, d.h. sie zeigen keinen Einfluß auf die Grenzflächenspannung Styrol/Wasser. Aus diesem Grund kann der abgesiebte Feinanteil bei Folgeansätzen ohne Beeinträchtigung der Suspensionsstabilität als Wiederauflösematerial verwendet werden.

Die mit den kurzkettigen Betainen ausgerüsteten expandierbaren Polystyrolteilchen lassen sich entgegen der Lehre der US-Patentschrift auch gut verschäumen. Ferner spalten die erfindungsgemäß eingesetzten Betaine unter Verarbeitungsbedingungen kein Amin ab. Sie sind physiologisch einwandfrei und sind als Nebenprodukte bei der Zuckerfabrikation leicht und wohlfeil zugänglich.

Die Oberfläche der Teilchen der Formmasse wird am zweckmäßigsten mit wäßrigen oder alkoholischen Lösungen des Betains beschichtet. Der Beschichtungsvorgang kann im Verlauf der Aufarbeitung z.B. durch Zugabe der Betainlösungen während des Trocknungsvorganges erfolgen. Auch ist es möglich, Lösungen auf die Masseteilchen vor dem Sieben aufzudüsen und die Lösungsmittel abzudampfen.

## Beispiel 1

Ein auf 35°C abgekühlter, durch Suspensionspolymerisation hergestellter Ansatz verschäumbarer Polystyrolteilchen, der auf 200 kg wäßrige Phase 200 kg Perlen enthält, wird in einer Nutsche von der wäßrigen Phase abgetrennt. Unterschiedliche Mengen von Glykokollbetain werden als 2%ige Lösung in einem Mischer auf die feuchten Perlen aufgedüst. Anschließend wird in einem Umlufttrockner bei Raumtemperatur getrocknet und danach gesiebt.

Die Menge des Feinanteils in den einzelnen Fraktionen wird nach dem Vorschäumen der Rohperlen geprüft. Dazu werden 100 g vorgeschäumtes Material in einem Glaszylinder, dessen oberes Ende mit einem engmaschigen Sieb bedeckt ist, gegeben. Durch den Glaszylinder wird 10 Minuten ein Luftstrom geleitet. Der Feinanteil wird durch den Luftstrom durch das Sieb aus dem Zylinder ausgetragen, gesammelt und ausgewogen.

TABELLE zu BEISPIEL 1

| Menge an Betain Gew.–% | Gew.–% Feinanteil in den Siebfraktionen | | Siebung | Aufladung |
|---|---|---|---|---|
| | 0,5 bis 1 mm | 1 bis 2 mm | | |
| – | 0,250 | 0.195 | schlecht | stark |
| 0,005 | 0,009 | 0,008 | gut | mäßig |
| 0,07 | 0,002 | 0,002 | gut | gut |
| 0,02 | 0,001 | 0,001 | gut | gut |

Beispiel 2

Ein auf 35°C abgekühlter, durch Suspensionspolymerisation hergestellter Ansatz verschäumbarer Polystyrolteilchen, der auf 1 t wäßrige Phase 1 t Perlen enthält, wird mittels Siebschleuder von der wäßrigen Phase abgetrennt, in einem mehrstüfigen Trockner von Außen- und Innenfeuchte befreit, pneumatisch zu Siebmaschinen gefördert und dort durch Sieben in die den Verkaufstypen entsprechenden Kornfraktionen aufgeteilt. Das Siebhilfsmittel wird in Form einer 2%igen wäßrigen Lösung während des Trockenvorganges zugegeben. Die Prüfung erfolgte wie in Beispiel 1 beschrieben.

TABELLE zu BEISPIEL 2

| Menge an Betain Gew.–% | Gew.–% Feinanteil in den Siebfraktionen | | Siebung | Aufladung |
|---|---|---|---|---|
| | 0,5 bis 1 mm | 1 bis 2 mm | | |
| 0 | 0,1423 | 0.0124 | schlecht | stark |
| 0,01 | 0,0080 | 0,0024 | gut | gut |
| 0,02 | 0,0075 | 0,0010 | gut | gut |

**Patentansprüch**

Kleinteilige verschäumbare Formmassen auf der Grundlage von treibmittelhaltigen Styrolpolymerisaten, dadurch gekennzeichnet,
daß die Oberfläche der Teilchen mit Betainen der allgemeinen Formel

$$(R)_3-\overset{+}{N}-CH_2-COO^-$$

beschichtet ist, wobei R gleichartige oder verschiedenartige Kohlenwasserstoffreste mit 1 bis 4 Kohlenstoffatomen darstellt und wobei die Betaine in Mengen von 0,001 bis 1 Gewichtsprozent, bezogen auf die Formmassen, eingesetzt werden.

**Revendication**

Des matières à mousser, en perles, à base de polymères de styrène contenant des agents de gonflement,
caractérisées par ce que la surface des particules est revêtue de bétaïnes de la formule générale

$$(R)_3\overset{+}{N}-CH_2-COO^-$$

R représentant des radicaux d'hydrocarbure similaires ou différents ayant 1 à 4 atomes de carbone et les bétaïnes étant utilisées à un taux allant de 0,001 à 1% en poids par rapport aux matières à mouler.

**Claim**

Expandable moulding compounds in bead form based on blowing agent-containing styrene polymers,
characterized in that the surface of the beads is coated with betaines having the general formula

$$(R)_3\overset{+}{N}-CH_2-COO^-,$$

R representing similar or different hydrocarbon residues with 1 to 4 carbon atoms and betaine being used in quantities of 0.001 to 1 percent by weight related to the moulding compounds.